# EUROPÄISCHE PATENTANMELDUNG

(11) **EP 0 977 020 A1**
(43) Veröffentlichungstag der Anmeldung: **02.02.2000**
(21) Anmeldenummer: 99113242.4
(22) Anmeldetag: 06.07.1999
(51) Int. Cl.: G01F 23/284, G01V 3/12, G01S 13/04

(54) **Verfahren, Vorrichtung und Satz mit zwei Vorrichtungen zum Bestimmen einer Intensität eines Radarsignals**

(30) Priorität: 28.07.1998 DE 19833966
(71) Anmelder: SIEMENS AKTIENGESELLSCHAFT, 80333 München (DE)
(72) Erfinder: Heide, Patric, Dr., 85579 Neubiberg (DE)

(57) **Zusammenfassung**

Die Erfindung betrifft ein Verfahren und eine Vorrichtung zum Bestimmen einer Intensität eines eine Meßstrecke (1) passiert habenden Radarsignals. Dieses wird entlang der Meßstrecke (1) gesendet, dann empfangen und mit einem eine gegebene Lokalfrequenz habenden Lokalsignal gemischt. Das erhaltene Mischsignal wird bandpaßgefiltert und dadurch ein eine vorgegebene Zwischenfrequenz habendes Meßsignal ausselektiert. Durch Messen einer Intensität des Meßsignals erfolgt die gewünschte Bestimmung der Intensität des die Meßstrecke (1) passiert habenden Radarsignals.

## Beschreibung

Die Erfindung betrifft ein Verfahren zum Bestimmen einer Intensität eines eine Meßstrecke passiert habenden Radarsignals, wobei zunächst das Radarsignal erzeugt und entlang der Meßstrecke gesendet sowie nach Passieren der Meßstrecke empfangen wird, worauf das gewünschte Bestimmen der Intensität erfolgt. Die Erfindung betrifft auch eine entsprechend ausgebildete Vorrichtung.

Ein solches Verfahren und eine solche Vorrichtung sind bekannt aus einem Prospekt der Endress + Hauser Meßtechnik GmbH & Co., Maulburg, DE betreffend einen zum Aufbau einer Mikrowellen- oder Radarschranke geeigneten Sender QR30 und einen zugehörigen Empfänger DR30. Der Sender und der Empfänger arbeiten auf einer Frequenz bei 24 GHz. Eine andere in dem Prospekt genannte Radarschranke arbeitet bei einer Frequenz zwischen 5 GHz und 6 GHz.

Die DE 4429118 C2, die WO 97/09637 A2 und die WO 97/09638 A2 betreffen jeweils einen mit einem Radarsignal arbeitenden Sensor zur Bestimmung eines Abstandes oder einer Bewegung eines Meßobjekts; dabei wird ein von dem Sensor ausgesandtes Radarsignal an dem Objekt reflektiert und gelangt zurück zu dem Sensor, wo es einer bestimmten Auswertung unterworfen wird. Jedes genannte Dokument gibt darüber hinaus einen gewissen Überblick über die technischen Möglichkeiten, die dem einschlägig bewanderten Fachmann zu Gebote stehen.

Eine Radarschranke gelangt herkömmlich zur Anwendung in einer Industrieanlage, beispielsweise zur Überwachung einer Fördereinrichtung, in einem Gebäude, beispielsweise um einen Zugang zu einem kritischen Bereich des Gebäudes zu überwachen oder in der schienen- oder straßengebundenen Verkehrstechnik. Je nach Anwendung, insbesondere bei einer hohen Anforderung an die Betriebssicherheit, muß eine Radarschranke neben einem zuverlässigen Nachweis einer in ihre Meßstrecke gelangten absorbierenden Masse eine ausreichend hohe Sicherheit vor Störeinflüssen bieten. Ein solcher Störeinfluß kann sich ergeben aus einem Drifteffekt, wie er beispielsweise in einer einfach und kostengünstig aufgebauten Radarschranke zu erwarten sein könnte, oder ein Einfluß einer weiteren Radarschranke oder anderen Mikrowellenquelle, wie dies in einer komplexen Industrieanlage denkbar ist.

Aufgabe der Erfindung ist es, ein Verfahren und eine Vorrichtung der eingangs definierten Art anzugeben, bei dem bzw. bei der eine Störung durch einen allfällig zu erwartenden Störeinfluß unterdrückt bzw. unterdrückbar ist.

Zur Lösung der Aufgabe angegeben wird ein Verfahren zum Bestimmen einer Intensität eines eine Meßstrecke passiert habenden Radarsignals, umfassend:
Erzeugen des Radarsignals mit einer vorgegebenen Radarfrequenz und Senden des Radarsignals entlang der Meßstrecke;
Empfangen des die Meßstrecke passiert habenden Radarsignals;
Erzeugen eines eine Lokalfrequenz habenden Lokalsignals, wobei die Lokalfrequenz um eine vorgegebene Zwischenfrequenz von der Radarfrequenz verschieden ist, und Mischen des Lokalsignals mit dem die Meßstelle passiert habenden Radarsignal unter Erzeugen eines Mischsignals;
Bandpaßfiltern des Mischsignals zum Selektieren eines die Lokalfrequenz habenden Meßsignals aus dem Mischsignal;
Bestimmen der Intensität des die Meßstrecke passiert habenden Radarsignals durch Messen einer Intensität des Meßsignals.

Dementsprechend beruht die Erfindung darauf, daß nicht in herkömmlicher Weise eine Bestimmung der Intensität unmittelbar aus dem empfangenen Radarsignal erfolgt, sondern daß das Radarsignal zunächst durch Mischen mit einem geeigneten Lokalsignal auf eine Lokalfrequenz umgesetzt und durch Filterung mit einem Bandpaß auf denjenigen Anteil selektiert wird, welcher durch das Radarsignal selbst verursacht ist. Dies impliziert, daß die Zwischenfrequenz, auf welche das Radarsignal umgesetzt wird, so ausgewählt wird, daß ein geeignetes Bandpaßfilter verfügbar ist. Folgende Typen von Filtern kommen beispielsweise in Frage: mechanische Filter, keramische Filter, Quarzfilter und Oberflächenwellenfilter. In diesem Zusammenhang empfiehlt sich die Wahl der Zwischenfrequenz innerhalb eines Bereiches zwischen 0,5 MHz und 200 MHz. Es ist auch denkbar, das Verfahren unter Zuhilfenahme eines Signalprozessors durchzuführen, wobei dieser insbesondere die Funktion des Bandpaßfilters übernimmt und dazu mit einem geeigneten Software-Programm auszustatten ist. Insbesondere in diesem Fall ist eine Weiterbildung des Bandpaßfilters dahingehend möglich, daß die Mittenfrequenz des Bandpaßfilters sich einer eventuell auftretenden Schwankung der Radarfrequenz oder der Lokalfrequenz anpaßt.

Die Messung der Intensität des Meßsignals erfolgt vorzugsweise durch Gleichrichten des Meßsignals und Hochpaßfiltern des gleichgerichteten Meßsignals mit einer Grenzfrequenz unterhalb von 1 Hz, insbesondere unterhalb von 1/10 Hz, und Messen einer Intensität des gleichgerichteten und hochpaßgefilterten Meßsignals. Dabei ist das Hochpaßfiltern deshalb von Interesse, weil es erlaubt, sehr niederfrequente Fluktuationen von der folgenden Auswertung auszuschließen. Eine solche niederfrequente Fluktuation ist insbesondere eine zunehmende Verschmutzung oder eine, beispielsweise alterungsbedingte, Drift. Es kann in der Regel davon ausgegangen werden, daß sich eine bestimmungsgemäß nachzuweisende absorbierende Masse auf der Meßstrecke bemerkbar macht durch ein Meßsignal, welches eine Frequenzkomponente von zumindest einigen Hertz aufweist; Die beschriebene Hochpaßfilterung ist daher keine Beeinträchtigung der eigentlichen Funktion.

Bevorzugt ist es auch, das gleichgerichtete Meßsignal zusätzlich einer Tiefpaßfilterung zu unterwerfen, wobei die Tiefpaßfilterung mit der vorher erwähnten Hochpaßfilterung in einer Bandpaßfilterung zusammengefaßt sein kann. Die zusätzliche Hochpaßfilterung schließt einen eventuellen Störeinfluß durch ein in die Meßschaltung eingestreutes Hochfrequenzsignal aus und erhöht die Betriebssicherheit.

Das Verfahren dient vorzugsweise zum Nachweisen einer absorbierenden Masse auf der Meßstrecke, also im Rahmen des Betriebs einer Radarschranke.

Die zum Einsatz kommende Radarfrequenz beträgt vorzugsweise etwa 24 GHz, da für diesen Frequenzbereich kompakte, klein bauende Antennen sowie zuverlässige Schaltungskomponenten verfügbar sind. Die Lokalfrequenz beträgt vorzugsweise zwischen 0,5 MHz und 200 MHz, wie bereits angedeutet.

Zur Lösung der Aufgabe angegeben wird auch eine Vorrichtung zum Bestimmen einer Intensität eines eine Meßstrecke passiert habenden Radarsignals, umfassend
einen Sensor zum Erzeugen des Radarsignals mit einer vorgegebenen Radarfrequenz;
eine Antennenanordnung zum Senden des Radarsignals entlang der Meßstrecke und Empfangen des die Meßstrecke passiert habenden Radarsignals;
einen Empfänger mit einem Lokaloszillator zum Erzeugen eines eine vorgegebene Lokalfrequenz, die um eine vorgegebene Zwischenfrequenz von der Radarfrequenz verschieden ist, habenden Lokalsignals, einem Mischer zum Mischen des Lokalsignals mit dem die Meßstrecke passiert habenden Radarsignal unter Erzeugen eines Mischsignals und einem Bandpaßfilter zum Selektieren eines die Lokalfrequenz habenden Meßsignals aus dem Mischsignal;
eine Meßschaltung zum Bestimmen der Intensität des die Meßstrecke passiert habenden Radarsignals durch Messen einer Intensität des Meßsignals.

Vorteile dieser Vorrichtung entsprechen Vorteilen des vorstehend beschriebenen Verfahrens, wesbezüglich auf die vorigen Ausführungen verwiesen wird.

Die Meßschaltung in der Vorrichtung umfaßt vorzugsweise einen Gleichrichter zum Gleichrichten des Meßsignals, ein Meßfilter zum Hochpaßfiltern des gleichgerichteten Meßsignals mit einer Grenzfrequenz unterhalb von 1 Hz und eine Gleichstrom-Meßeinrichtung zum Messen des gleichgerichteten und hochpaßgefilterten Meßsignals. Das Meßfilter ist vorzugsweise ein Bandpaßfilter; siehe dazu die obigen Ausführungen zu einer entsprechenden bevorzugten Gestaltung des erfindungsgemäßen Verfahrens.

Die Gleichstrom-Meßeinrichtung enthält vorzugsweise eine Triggerschaltung und eine dieser nachgeschaltete Anzeigeeinrichtung. Die Triggerschaltung dient dazu, aufgrund der Messung der Intensität zu unterscheiden zwischen einem ersten Zustand, in welchem die Meßstrecke frei von absorbierenden Massen ist, und einem zweiten Zustand, in welchem sich mindestens eine absorbierende Masse auf der Meßstrecke befindet. Die Anzeigeeinrichtung kann dabei in der Tat lediglich eine visuelle Anzeige bewirken, es kann sich auch um eine Meldeeinrichtung zur Weitergabe einer Information an eine mehr oder weniger komplexe Anlage, beispielsweise eine Fördereinrichtung in einer Industrieanlage, handeln.

Die räumliche Anordnung des Senders und des Empfängers der Vorrichtung an der Meßstrecke unterliegt grundsätzlich keiner Beschränkung. Bevorzugt ist eine Ausbildung der Vorrichtung dahingehend, daß der Sender und der Empfänger in enger räumlicher Nachbarschaft zueinander an ein und demselben Ende der Meßstrecke angeordnet sind, wobei zusätzlich ein Reflektor am jenseitigen Ende der Meßstrecke postiert ist. Dieser Reflektor wirft ein von dem Sender über die Meßstrecke gesendetes Signal zurück zum Empfänger, so daß es ein zweites Mal die Meßstrecke passiert. Folgende Ausbildung der Vorrichtung ist in diesem Zusammenhang besonders bevorzugt: Die Antennenanordnung umfaßt einen Zirkulator, eine sowohl zum Senden als auch zum Empfangen bestimmte bifunktionale Antenne und einen bezüglich der Antenne jenseits der Meßstrecke positionierten Reflektor, wie bereits beschrieben. Der Zirkulator ist dabei sowohl mit dem Sender als auch mit dem Empfänger verbunden derart, daß er ein Radarsignal vom Sender nur zur Antenne und ein Radarsignal von der Antenne nur zum Empfänger leitet. Ein solcher Zirkulator ist grundsätzlich bekannt und bedarf an dieser Stelle keiner näheren Erläuterung.

Die erfindungsgemäße Vorrichtung ist besonders vorzugsweise mit einer weitgehend identisch aufgebauten Vorrichtung kombiniert zu einem Satz mit zwei erfindungsgemäßen Vorrichtungen, umfassend zwei Sendeempfängeranordnungen, zwischen denen sich die Meßstrecke befindet, wobei jede Sendeempfängeranordnung aufweist:
einen Sender einer ersten und einen Empfänger einer zweiten Vorrichtung, wobei dieser Sender auch der Lokaloszillator dieses Empfängers ist; und
eine Antennenanordnung, die mit dem Sender und dem Empfänger verbunden ist; die Antennenanordnung umfaßt dabei vorzugsweise einen Zirkulator und eine bifunktionale Antenne, wie bereits erläutert.

Dieser Satz mit zwei Vorrichtungen ermöglicht eine zweikanalige Überwachung der Meßstrecke, wobei diese beiden Kanäle unabhängig voneinander arbeiten können. Man erhält dann nicht nur eine Aussage hinsichtlich der Anwesenheit einer absorbierenden Masse auf der Meßstrecke, sondern deren zwei und kann diese zur weiteren Erhöhung der Betriebssicherheit weiter in entsprechender Weise verwerten. Von Vorteil ist auch, daß jedweder besondere Lokaloszillator entfällt, da jeder Sender zusätzlich eine solche Funktion übernimmt. Es ist dabei erforderlich, daß die beiden Sender auf voneinander verschiedenen Radarfrequenzen arbeiten, wobei die Zwischenfrequenz genau die Differenz dieser beiden Frequenzen ist.

Eine bevorzugte Ausgestaltung dieses Satzes besteht darin, daß die beiden Sendeempfängeranordnungen eine gemeinsame Meßschaltung haben, welche ein Meßmischer zur Mischung beider Meßsignale miteinander zur Erzeugung eines jedem Meßsignal proportionalen Gleichstromsignals, ferner ein Meßfilter der erläuterten Art und eine Gleichstrom-Meßeinrichtung wie bereits erläutert aufweist. Diese bevorzugte Ausgestaltung macht Gebrauch von der Tatsache, daß die beiden in dem Satz auftretenden Zwischenfrequenzen vollkommen identisch zueinander sind; es ist daher möglich, durch Mischen der beiden Meßsignale ein Gleichstromsignal zu erzeugen, zu welchem beide Vorrichtungen beitragen und welches ausschließlich bestimmt ist durch Signale, die eine feste Korrelation zueinander haben. Es versteht sich, daß es gegebenenfalls erforderlich sein kann, dem Meßmischer einen Phasenschieber zur Einstellung der Phase zumindest eines der Meßsignale vorzuschalten, um sicherzustellen, daß das Meßergebnis nicht durch eine unvorteilhafte Überlagerung der beiden Meßsignale im Meßmischer in Frage gestellt wird. Gegebenenfalls kann der Einsatz eines Quadraturmischers als Meßmischer von Vorteil sein.

Ausführungsbeispiele der Erfindung werden nunmehr anhand der Zeichnung näher erläutert. Die Zeichnung enthält schematische Darstellungen. Im einzelnen zeigen:
- Figur 1: eine Vorrichtung, bei der Sender und Empfänger an verschiedenen Enden der Meßstrecke angeordnet sind;
- Figur 2: einen Ausschnitt aus einer Vorrichtung, bei der Sender und Empfänger räumlich vereinigt und an einem Ende der Meßstrecke postiert sind;
- Figur 3: einen Satz mit zwei Vorrichtungen nebst gemeinsamer Gleichstrom-Meßeinrichtung.

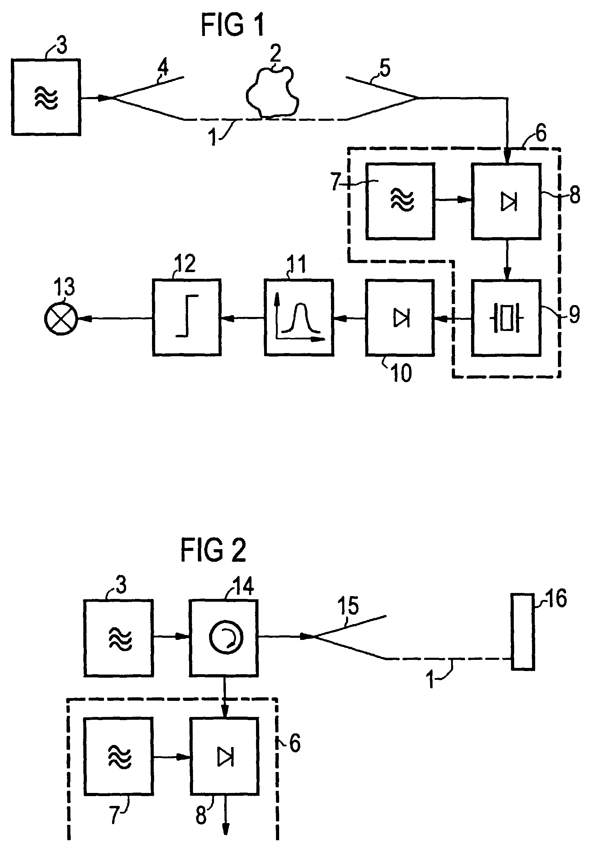

Figur 1 zeigt eine Vorrichtung zur Bestimmung einer Intensität eines eine Meßstrecke 1 passiert habenden Radarsignals, wobei die Höhe dieser Intensität abhängig ist von der Anwesenheit einer absorbierenden Masse 2 auf der Meßstrecke 1. Die Vorrichtung umfaßt einen Sender 3, welcher das Radarsignal erzeugt und der Sendeantenne 4 zuleitet. Von dort wird es über die Meßstrecke 1 gesandt, gelangt zu einer Empfangsantenne 5 und von dort in einen Empfänger 6. Im Empfänger 6 dargestellt sind nur die vorliegend wesentliche Bedeutung habende Elemente; von der Darstellung allfällig notwendiger Verstärker und dergleichen wurde der Übersicht halber abgesehen. Der Empfänger 6 enthält einen Lokaloszillator 7 und einen Mischer 8. In diesem wird das von dem Lokaloszillator 7 gebildete Lokalsignal gemischt mit dem die Meßstrecke 1 passiert habenden Radarsignal zu einem Mischsignal, welches zu einem Bandpaßfilter 9 gelangt. Dies selektiert aus dem Mischsignal ein Meßsignal, welches eine durch Vorgabe der Radarfrequenz und der Lokalfrequenz bestimmte Zwischenfrequenz hat. Dieses Meßsignal gelangt weiterhin an eine Meßschaltung 10, 11, 12, 13 zum Bestimmen der Intensität des die Meßstrecke 1 passiert habenden Radarsignals durch Messen einer Intensität des Meßsignals. Die Meßschaltung 10, 11, 12, 13 umfaßt einen Gleichrichter 10, ein Meßfilter 11, eine Triggerschaltung 12 und eine Anzeigeeinrichtung 13, hier symbolisch als Lampe 13 dargestellt. Das Meßfilter 11 ist zweckmäßig ein Bandpaßfilter wie vorstehend ausgeführt und filtert sowohl extrem niederfrequente als auch extrem hochfrequente Anteile aus dem gleichgerichteten Meßsignal heraus. Die Triggerschaltung 12 schließlich wertet das gleichgerichtete und gefilterte Meßsignal aus zur Bestimmung eines Zustandes der Meßstrecke 1, welcher Zustand die Werte "frei von einer absorbierenden Masse 2" und "belegt mit einer absorbierenden Masse 2" annehmen kann. Die Lampe 13 dient als Symbol; es gibt hier je nach Anwendung der Vorrichtung eine Fülle von Möglichkeiten.

Die Vorrichtung gemäß Figur 2 unterscheidet sich nur hinsichtlich der Ausgestaltung der Antennenanordnung von der Vorrichtung gemäß Figur 1 und ist dementsprechend nur ausschnittsweise dargestellt. Die Vorrichtung gemäß Figur 2 ist wesentlich ausgezeichnet dadurch, daß der Sender 3 und der Empfänger 6 an ein und demselben Ende der Meßstrecke 1 angeordnet sind. Dazu umfaßt die Antennenanordnung einen sowohl mit dem Sender 3 als auch mit dem Empfänger 6 verbundenen Zirkulator 14, welcher darüber hinaus verbunden ist mit einer bifunktionalen Antenne 15, welche gleichermaßen zum Senden und zum Empfangen dient. Damit das von der bifunktionalen Antenne 15 ausgesandte Radarsignal nach einmaligem Passieren der Meßstrecke 1 zurückgelangt zur bifunktionalen Antenne 15, ist am entsprechenden Ende der Meßstrecke 1 ein Reflektor 16 aufgestellt. Dieser wirft ein von der bifunktionalen Antenne 15 einfallendes Signal zu dieser zurück.

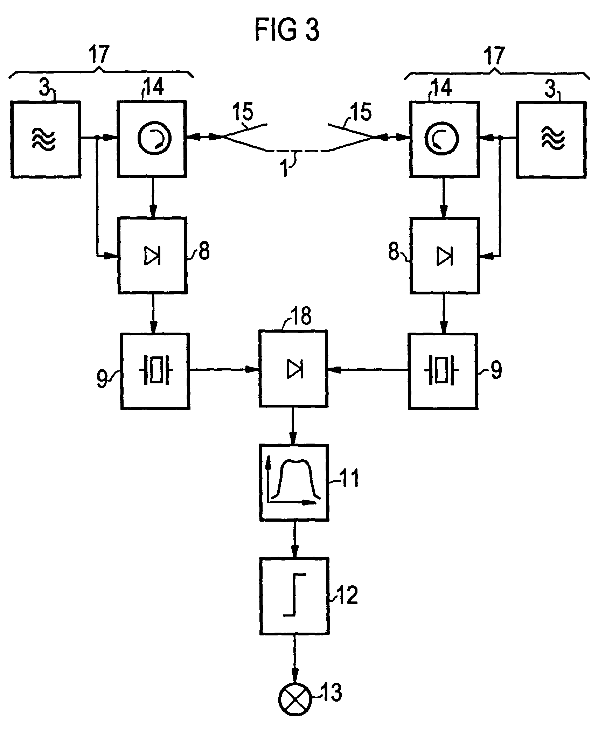

Figur 3 zeigt einen Satz umfassend zwei Vorrichtungen der vorstehend erläuterten Art, so daß mit diesem Satz eine Überwachung der Meßstrecke 1 mit zwei voneinander im wesentlichen unabhängigen Radarsignalen erfolgen kann. Jede dieser Vorrichtungen hat einen Zirkulator 14 und eine bifunktionale Antenne 15, wobei die bifunktionalen Antennen 15 so ausgerichtet sind, daß sie Radarsignale untereinander austauschen. Jede Vorrichtung umfaßt auch einen Zirkulator 14, welcher einerseits ein Radarsignal vom jeweiligen Sender 3 zur jeweiligen bifunktionalen Antenne 15 und andererseits ein Signal von der jeweiligen bifunktionalen Antenne 15 zum jeweiligen Mischer 8 leitet. Als Lokaloszillator funktioniert jeweils ein Sender 3, so daß in jedem Mischer 8 ein Radarsignal aus dem Sender 3 der jeweils anderen Vorrichtung mit einem Lokalsignal aus dem eigenen Sender 3 gemischt wird. Nach der in entsprechenden Bandpaßfiltern 9 vorgenommenen Filterung liegen somit zwei Meßsignale vor, welche zueinander identische Zwischenfrequenzen haben; beide Zwischenfrequenzen entsprechen der Differenz der Radarfrequenzen der beiden Sender 3. Diese beiden Meßsignale gelangen zu einem beiden Sendeempfängeranordnungen 17 gemeinsamen Meßmischer 18, welcher die beiden Meßsignale miteinander mischt und ein beiden Meßsignalen proportionales Gleichstromsignal erzeugt. Dies gelangt in bekannter Weise über ein Meßfilter 11 zu eine Triggerschaltung 12, welche eine Anzeigeeinrichtung 13 speist. Die besondere Bevorzugung dieser Vorrichtung erklärt sich daraus, daß sie teilweise mehrkanalig ist und zur Entscheidung, ob sich eine absorbierende Masse auf der Meßstrecke 1 befindet, zwei Meßsignale heranzieht. Die Betriebssicherheit dieser Vorrichtung ist daher besonders hoch.

Ein bevorzugter Frequenzbereich zum Betrieb aller in der Zeichnung dargestellten Vorrichtungen liegt zwischen 1 GHz und 80 GHz, vorzugsweise bei 24 GHz. Die Zwischenfrequenz liegt bevorzugtermaßen in einem Bereich zwischen 0,5 MHz und 200 MHz, insbesondere bei etwa 100 MHz. Für diesen Bereich stehen insbesondere gute Bandpaßfilter zur Verfügung, auch ist eine voll digitale Signalverarbeitung mittels Signalprozessor möglich.

## Patentansprüche

1. Verfahren zum Bestimmen einer Intensität eines eine Meßstrecke (1) passiert habenden Radarsignals, umfassend:
Erzeugen des Radarsignals mit einer vorgegebenen Radarfrequenz und Senden des Radarsignals entlang der Meßstrecke (1);
Empfangen des die Meßstrecke (1) passiert habenden Radarsignals;
Erzeugen eines eine Lokalfrequenz habendes Lokalsignals, wobei die Lokalfrequenz um eine vorgegebene Zwischenfrequenz von der Radarfrequenz verschieden ist, und Mischen des Lokalsignals mit dem die Meßstrecke (1) passiert habenden Radarsignals unter Erzeugen eines Mischsignals;
Bandpaßfiltern des Mischsignals zum Selektieren eines die Zwischenfrequenz habenden Mischsignals aus dem Mischsignal;
Bestimmen der Intensität des die Meßstrecke (1) passiert habenden Radarsignals durch Messen einer Intensität des Meßsignals.

2. Verfahren nach Anspruch 1, bei welchem die Messung der Intensität des Meßsignals erfolgt durch Gleichrichten des Meßsignals und Hochpaßfiltern des gleichgerichteten Meßsignals mit einer Grenzfrequenz unterhalb von 1 Hz, insbesondere unterhalb von 1/10 Hz, und Messen einer Intensität des gleichgerichteten und hochpaßgefilterten Meßsignals.

3. Verfahren nach Anspruch 2, bei welchem das gleichgerichtete Meßsignal zusätzlich tiefpaßgefiltert ist.

4. Verfahren nach einem der vorstehenden Ansprüche, welches angewendet wird zum Nachweisen einer absorbierenden Masse (2) auf der Meßstrecke (1).

5. Verfahren nach einem der vorstehenden Ansprüche, bei dem die Radarfrequenz etwa 24 GHz beträgt, und bei dem die Lokalfrequenz zwischen 0,5 MHz und 200 MHz beträgt.

6. Vorrichtung zum Bestimmen einer Intensität eines eine Meßstrecke (1) passiert habenden Radarsignals umfassend:
einen Sender (3) zum Erzeugen des Radarsignals mit einer vorgegebenen Radarfrequenz;
eine Antennenanordnung (4, 5, 14, 15, 16) zum Senden des Radarsignals entlang der Meßstrecke (1) und Empfangen des die Meßstrecke (1) passiert habenden Radarsignals;
einen Empfänger (6) mit einem Lokaloszillator (3, 7) zum Erzeugen eines eine vorgegebene Lokalfrequenz, die um eine vorgegebene Zwischenfrequenz von der Radarfrequenz verschieden ist, habenden Lokalsignals, einem Mischer (8) zum Mischen des Lokalsignals mit dem die Meßstrecke (1) passiert habenden Radarsignal unter Erzeugen eines Mischsignals und einem Bandpaßfilter (9) zum Selektieren eines die Zwischenfrequenz habenden Meßsignals aus dem Mischsignal;
eine Meßschaltung (10, 11, 12 ,13) zum Bestimmen der Intensität des die Meßstrecke (1) passiert habenden Radarsignals durch Messen einer Intensität des Meßsignals.

7. Vorrichtung nach Anspruch 6, worin die Meßschaltung (10, 11, 12) einen Gleichrichter (10) zum Gleichrichten des Meßsignals, ein Meßfilter (11) zum Hochpaßfiltern des gleichgerichteten Meßsignals mit einer Grenzfrequenz unterhalb von 1 Hz und eine Gleichstrom-Meßeinrichtung (12, 13) zum Messen des gleichgerichteten und hochpaßgefilterten Meßsignals aufweist.

8. Vorrichtung nach Anspruch 7, worin das Meßfilter (11) ein Bandpaßfilter (11) ist.

9. Vorrichtung nach einem der Ansprüche 7 und 8, worin die Gleichstrom-Meßeinrichtung (12, 13) eine Triggerschaltung (12)und eine dieser nachgeschaltete Anzeigeeinrichtung (13) aufweist.

10. Vorrichtung nach einem der Ansprüche 6 bis 9, worin die Antennenanordnung (4, 5, 14, 15, 16) einen Zirkulator (14), eine sowohl zum Senden als auch zum Empfangen bestimmte bifunktionale Antenne (15) und einen bezüglich der Antenne (15) jenseits der Meßstrecke (1) positionierten Reflektor (16) aufweist, welcher ein die Meßstrecke (1) einmal passiert habendes, von der Antenne (15) ausgesendetes Radarsignal über die Meßstrecke (1) zu der Antenne (15) reflektiert, wobei der Zirkulator (14) die Antenne (15) sowohl mit dem Sender (5) als auch mit dem jenem räumlich nahestehenden Empfänger (6) verbindet.

11. Ein Satz mit zwei Vorrichtungen nach den Ansprüchen 6 bis 10, umfassend zwei Sendeempfängeranordnungen (17), zwischen denen sich die Meßstrecke (1) befindet, wobei jede Sendeempfängeranordnung (17) aufweist:
einen Sender (3) einer ersten und einen Empfänger (8) einer zweiten Vorrichtung, wobei der Sender (3) auch der Lokaloszillator (3) des Empfängers (8) ist; und
eine Antennenanordnung (4, 5, 14, 15, 16), die mit dem Empfänger (8) verbunden ist.

12. Ein Satz nach Anspruch 11, bei dem jede Antennenanordnung (4, 5, 14, 15, 16) einen Zirkulator (14) und eine bifunktionale Antenne (15) umfaßt.

13. Ein Satz nach den Ansprüchen 11 und 12, bei dem beiden Sendeempfängeranordnungen (17) eine gemeinsame Meßschaltung (18, 11, 12, 13) zugeordnet ist, umfassend einen Meßmischer (18) zur Mischung beider Meßsignale miteinander zur Erzeugung eines jedem Meßsignal proportionalen Gleichstromsignals, ein Meßfilter (11) zur Hochpaßfilterung des Gleichstromsignals mit einer Grenzfrequenz unterhalb von 1 Hz und eine Gleichstrom-Meßeinrichtung (12, 13) zum Messen des hochpaßgefilterten Gleichstromsignals.
